**Europäisches Patentamt**

(19) **European Patent Office**

**Office européen des brevets**

(11) Publication number : **0 272 291 B1**

# (12) EUROPEAN PATENT SPECIFICATION

(45) Date of publication of patent specification :
01.04.92 Bulletin 92/14

(51) Int. Cl.⁵ : **G01N 21/64**

(21) Application number : **87903954.3**

(22) Date of filing : **27.05.87**

(86) International application number :
**PCT/US87/01259**

(87) International publication number :
**WO 87/07382 03.12.87 Gazette 87/27**

(54) **METHOD FOR MEASURING POLARIZED FLUORESCENCE EMISSIONS.**

(30) Priority : **27.05.86 US 867079**

(43) Date of publication of application :
**29.06.88 Bulletin 88/26**

(45) Publication of the grant of the patent :
**01.04.92 Bulletin 92/14**

(84) Designated Contracting States :
**AT BE CH DE FR GB IT LI LU NL SE**

(56) References cited :
**US-A- 4 131 800**
**US-A- 4 299 486**
**Biophysical Journal, vol. 23, 1978, Biophysical Society ; L. Cercek et al.:"Fluorescein excitation and emission polarization spectra in living cells. Changes during the Cell Cycle", pages 395-405**

(73) Proprietor : **CERCEK, Boris**
**4318 Camphor Avenue**
**Yorba Linda, CA 92686 (US)**
Proprietor : **CERCEK, Lea**
**4318 Camphor Avenue**
**Yorba Linda, CA 92686 (US)**

(72) Inventor : **CERCEK, Boris**
**4318 Camphor Avenue**
**Yorba Linda, CA 92686 (US)**
Inventor : **CERCEK, Lea**
**4318 Camphor Avenue**
**Yorba Linda, CA 92686 (US)**

(74) Representative : **Goldin, Douglas Michael et al**
**J.A. KEMP & CO. 14, South Square Gray's Inn**
**London WC1R 5EU (GB)**

## Description

Field of the Invention

This invention relates to a method for the measurement of polarized fluorescence emissions and more particularly to the use of such method to determine polarization values in viable lymphocytes for the detection of diseases in human and animal bodies.

Background of the Invention

Many diseases occurring in humans and animals can be detected by the presence of foreign substances or antigens in the blood which are produced as a result of the body's defenses against the disease. Detection of these antigens would appear to provide a diagnostic and treatment tool which is particularly suited for the early detection and treatment of the particular disease or condition which produces the antigen. However, any such procedure must be reliable, reproducible and sensitive and any such procedure should be able to be carried out by persons of ordinary skill and training in laboratory sciences and procedures. Preferably, such procedures should lend themselves to instrumentation and automation.

We have developed and reported one procedure for the early detection of cancer which is based upon the measurement of changes in the structuredness of the cytoplasmic matrix of living lymphocytes when exposed to cancer antigens. L. Cercek, B. Cercek, C. I. V. Franklin, "Biophysical Differentiation between Lymphocytes from Healthy Donors, Patients With Malignant Diseases and Other Disorders," Brit. J. Cancer, Vol. 29, 345 (1974); L. Cercek, B. Cercek, "Application of the Phenomena of Changes in the Structuredness of Cytoplasmic Matrix (SCM) in the Diagnosis of Malignant Disorders: A Review," Europ. J. Cancer, Vol. 13,903-915 (1977). In accordance with our procedure we separate a sub-population of SCM-responding lymphocytes from a sample of blood and incubate these lymphocytes with an antigen extracted from a general pool of various malignant tissues or with an antigen extracted from tissue containing a specific type of malignancy. If the blood sample donor is afflicted with a malignancy there will be a characteristic SCM-response exhibited by the lymphocytes after incubation with the cancer associated antigen which can be differentiated from the SCM-response of lymphocytes from donors not afflicted with malignancy. Similarly if the donor is afflicted with the same type of malignancy as that from which the specific tissue antigen was extracted, a characteristic SCM-response will be exhibited which is distinguished from the SCM-response of lymphocytes derived from donors who are not afflicted with that type of malignancy. Thus the SCM-test procedure can be utilized both as a screening test for cancer and as a specific diagnostic test for cancer.

Expanding on these results we have found that the SCM-test for cancer can be applied with equivalent results to other types of antigen producing diseases such as, for example, viral and bacterial infections, determination of allergenic reactions, tissue typing, and monitoring allograft rejection. The presence of other antigen producing diseases and conditions of the body will not interfere and indeed, a patient afflicted with more than one type of antigen producing disease can be tested for a multiplicity of such diseases simply by running separate tests using for each test an antigen derived from the diseases or conditions being tested for.

The SCM-response of the lymphocytes is most conveniently measured by fluorometric techniques and more particularly by measuring the intracellular fluorescein fluorescence polarization of the lymphocytes. This is accomplished by introducing fluorescein into the cell and measuring the horizontal and vertical components of emitted fluorescence due to excitation of the cell by an energy source, such as blue light. Lymphocytes testing positively to an antigen will exhibit a substantial decrease in fluorescence polarization value as compared to unstimulated control lymphocytes if the donor is afflicted with the disease or condition which produced or which is associated with the antigen against which the lymphocytes were tested. On the other hand, lymphocytes from donors who are not afflicted with the antigen producing disease or condition, will not exhibit a significant decrease in their polarization value after contact with that antigen, indicating a negative SCM-response.

Fluorescein molecules are introduced into the lymphocytes being tested by forming a suspension of the test lymphocytes in a substrate solution of fluorogenic agent such as fluorescein diacetate (FDA) in sterile complete phosphate buffered saline solution. The FDA permeates the cell membrane and is converted to fluorescein molecules by enzymatic hydrolysis. Fluorescence measurements are taken on the suspension which is then filtered and fluorescence measurements taken on the filtrate. The filtrate emissions are deducted as background fluorescence from the total emissions of the suspension to arrive at the emission intensity for the lymphocytes. Such a method is described by L.Cercek et al, Biophys. J. vol 23, 395 - 405 (1978). However, the time between recording the suspension emission and carrying out the filtration step must be kept to a minimum in order to avoid erroneous results. Considerable reliance is placed on the skill of the operator to ensure that the filtration step is properly carried out.

## Summary of the Invention

The present invention, which is described in connection with fluorescence emission measurements of cell suspensions but which is applicable to any fluorescing material where background fluorescence is a problem, provides an improved method for measuring and recording the vertical and horizontal components of fluorescence emissions including compensating for background fluorescence without physically separating the fluorescing material from the substrate causing the background fluorescence. The background fluorescence, such as may be due to leakage of a fluorogenic agent, such as fluorescein, from the lymphocytes into the substrate in which they are suspended, is compensated for in a single measurement. The necessity of a filtration step to measure the background emission is eliminated. Errors due to time lags between measurements and the multiple handling of the suspension are eliminated. The measurement technique is readily automated thus making the procedure easier to use and more reliable.

The present invention thus provides a method for testing a sample of blood of a donor for the presence of a condition or disease in the body of the donor, said method being based upon the response of lymphocytes separated from a sample of the donor's blood in contact with a substance selected from mitogens or antigens associated with the condition or disease being test for,

the lymphocyte response being indicated by changes in the structuredness of the cytoplasmic matrix (SCM) of said lymphocytes sensitised to said substance as a result of the presence of said disease or condition in the donor, said change in the SCM being measured by the polarized intracellular fluorescence of said lymphocytes,

the method comprising:

measuring horizontally at a first wavelength and at a second wavelength and measuring vertically at said first wavelength and said second wavelength polarized fluorescence emissions from a suspension of lymphocytes in a substrate, said measurements being taken at a first wavelength and at a second wavelength within the range of wavelengths determined by the bathochromic shift of fluorescence emissions,

obtaining therefrom the total fluorescence emission of said suspension at each of said wavelengths,

determining a factor representing the fraction of said total intensity of said fluorescence emission due to extracellular fluorescence,

deriving therefrom the vertically and horizontally polarized emission intensities of said extracellular fluorescence,

deducting said extracellular intensities from said vertically and horizontally polarized emission intensities measured at said first wavelength to obtain the vertically and horizontally polarized emission intensities due to intracellular fluorescence, and

thereafter applying said intracellular fluorescence emission intensities to calculate the polarization value of said lymphocytes in said suspension.

In accordance with the present invention, vertically and horizontally polarized fluorescence emissions are measured at a first wavelength and at a second wavelength. The second wavelength is determined by the bathochromic shift of the emission spectra due to background fluorescence emissions. The total fluorescence emission at each of the wavelengths are reduced to a factor representing the fraction of the total intensity of the fluorescence emissions at the first wavelength due to background fluorescence. Utilizing this factor, the vertically and horizontally polarized emission intensities due to background fluorescence at the first wavelength are derived and deducted from the polarized total fluorescence emission intensities to obtain the vertically and horizontally polarized intracellular fluorescence emission intensities which are used to calculate the polarization value of the emitted fluorescence.

Fluorescence measurements are preferably carried out in a fluorescence spectrophotometer equipped with a polarization filter for polarizing the excitation energy and a second polarization filter which is movable between a vertical and a horizontal position for polarizing the emissions passing the vertical and horizontal components of the emitted fluorescence to the photodetection system. Although the spectrophotometer may be equipped with a single photodetector and with means for sequentially measuring the emissions at two different wave lengths, it is preferred that the spectrophotometer be equipped with at least two photo-multipliers so that emissions at two wave lengths can be measured simultaneously.

Utilizing the method of the present invention the background fluorescence due to extracellular fluorescence can be automatically compensated for and the separate filtration step thereby eliminated. By utilizing the method of the invention the level of experience, skill and technique required to properly derive the horizontal and vertical fluorescence emission intensities from a lymphocyte suspension are substantially reduced and simplified and may be carried out within the spectrophotometer itself making the above-described SCM-test method available for routine use in clinical laboratories.

The present invention further provides a method as disclosed in Claim 14 and, respectively, at the end of the description.

Other advantages of the present invention will become apparent from the following detailed description taken in conjunction with the drawings.

Brief Description of the Drawings

FIG 1 is a flow chart of the SCM-test procedure: and
FIG 2 is a schematic diagram of the fluorescence spectrophotometer arrangement utilized for measurement of the SCM-response of the lymphocyte suspension.

Detailed Description of the Invention

The SCM-test for the detection of cancer and other antigen producing diseases and body conditions is based upon the measurement of changes in the physical state of organization of the cytoplasmic matrix in living cells after incubation with an antigen produced by the disease or body condition being tested for. The term "structuredness of the cytoplasmic matrix" or SCM, is used to describe the physical state of organization of the cytoplasmic matrix at the molecular level. Studies on the mechanisms of SCM-changes revealed that on excitation at 470 nm or 442nm the intracellular fluorescein fluorescence polarization at 510nm or 527nm respectively reflects "structural changes in the mitochondria (SCM)" denoting their transitions from the resting, orthodox conformation into the active, ATP-generating, condensed conformation and vice versa. (L. Cercek & B. Cercek, 1979, Biophysics.J;Vol. 28, 403-412). Such changes in the SCM are measurable in a certain sub-population of lymphocytes found in peripheral blood. As reported by the Cerceks, Europ. J. Cancer, supra, human and animal responding lymphocytes from donors afflicted with cancer exhibit differential SCM-responses to phytohaemagglutinin and to cancer basic proteins and antigens derived from specific types of malignant tissue as compared to SCM-responding lymphocytes from patients not afflicted with malignancies. As reported the test is useful both as a screening test and as a specific diagnostic tool. Using the same procedures as reported, the SCM-test has been expanded to other antigen producing diseases and body conditions such as the determination of allergenic reactions to various substances, the detection and determination of viral and bacterial infections and the like. As used in connection with the SCM-test, the term "antigen" is used in its broadest sense to designate any foreign disease or condition related substance, which evokes the SCM-response in SCM-responding lymphocytes.

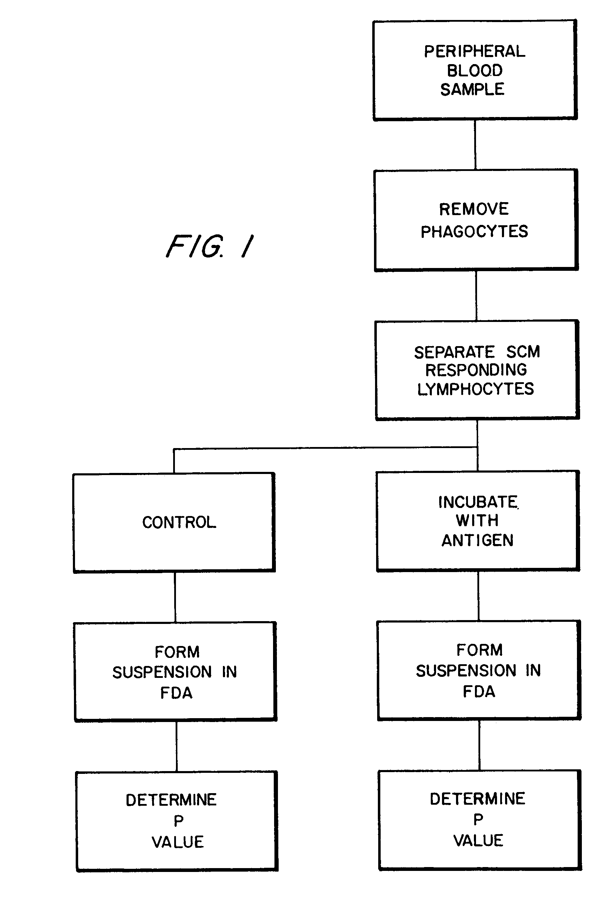

In accordance with the test procedure as shown in FIG.1, a sample of peripheral blood is drawn from a donor and is collected in a heparinized tube. After collection the peripheral blood is treated with iron powder or carbonyl-iron powder and then placed on a magnet to effect separation of the phagocytic cells along with the iron powder from the blood sample. A portion of the blood sample is then transferred to a multi-gradient density solution and centrifuged to effect the separation of the SCM-responding lymphocytes from other blood components based upon their densities in the multi-gradient solution. After separation and washing a portion of the SCM-responding lymphocytes are retained as a control and other portions are stimulated by incubation with antigens derived from or associated with the disease or condition being tested for.

The SCM-response of the lymphocytes is determined by measuring the fluorescence polarization of the lymphocytes after admixture with a suitable fluorogenic agent, such as by forming a suspension of the lymphocytes in a solution of fluorescein diacetate (FDA) in phosphate buffered saline, to effect penetration of the lymphocytes by the fluorogenic agent. In the case of the preferred fluorogenic agent FDA, the FDA molecules which are converted into fluorescein molecules within the cell by enzymatic hydrolysis. The fluorescein molecules fluoresce when exposed to excitation energy in the form of vertically polarized light. SCM-response is indicated by the level of change of the polarized intracellular fluorescein polarization value of SCM-responding lymphocytes after stimulation with an antigen as compared to polarization value of a control suspension of the lymphocytes.

In accordance with the SCM-test procedure the polarization value (P) of a lymphocyte suspension is obtained by exciting the suspension with a source of light which has been polarized in the vertical plane. The fluorescence emissions from the suspension are also polarized and measurements of fluorescence emissions are made in the vertical plane and in the horizontal plane perpendicular to the vertical plane. These intensities, hereinafter referred to as $I_V$ for the vertical fluorescence component and $I_H$ for the horizontal fluorescence component are utilized to calculate the polarization value (P) for the suspension in accordance with the following formula:

$$(1)\ P = (I_V - G \times I_H)/(I_V + G \times I_H)\ ;\ \text{where}$$

$I_V$ and $I_H$ are polarized fluorescence intensities in the vertical and horizontal planes respectively and G is a correction factor for the unequal transmission of the horizontal and vertical components of the polarized energy through the optical system of the particular equipment used.

The value of G is determined by dividing the vertical fluorescence intensity by the horizontal fluorescence intensity emitted from a filtrate solution, or from a $10^{-7}$ M solution of fluorescein in phosphate buffered saline which has been excited with horizontally polarized light at the same wavelength as the vertically polarized exciting light.

The P Value of the stimulated lymphocyte suspension is then compared with the P value of an unstimulated control suspension of lymphocytes from the same donor and the percent change of stimulated to unstimulated lymphocytes is an indication of the SCM-response to an antigen.

To ensure reproducibility of results, using FDA as the fluorescing agent, the pH of the FDA substrate solution should be maintained at or slightly above 7.4 and the osmolality of the solution should be held to within ±1% of the isotonic value of 0.330 osm/kg. The selection of the excitation and the emission wavelengths is dependent upon the spectra of the lymphocyte/fluorogenic agent suspension. Changes in SCM-response are observed at specific combinations of excitation and emission wavelengths which are dependent upon fluorogenic agent employed. For example, using FDA as the fluorogenic agent the SCM response of the lymphocyte suspension is observed at the emission wavelength of 510nm and the excitation wavelength of 470nm or at the emission wavelength of 527nm and the excitation wavelength of 442nm.

A major problem with the use of the fluorescence polarization technique to measure SCM-response of lymphocytes resides in the extracellular fluorescence background which can adversely affect test results unless compensated for. Thus in the case of FDA as the fluorogenic agent, while a substantial portion of the fluorescein molecules formed as a result of enzymatic hydrolysis are retained in viable cells, some fluorescein molecules do leak out of the cells into the substrate solution and substantially add to the background fluorescence of the substrate solution resulting in loss of sensitivity and erroneous results. In accordance with the SCM-test procedure as practiced prior to this invention the lymphocyte suspension was filtered about four to seven minutes after recording the vertical and horizontal components of the fluorescence emissions of the cell suspensions and the vertical and horizontal components of the fluorescence emissions from the filtrate as well as the length of time of the filtration step were recorded. The fluorescence measurements were extrapolated to the half-time of the filtration step and subtracted from the vertical and horizontal fluorescence intensities of the suspension to obtain the vertical and horizontal fluorescence polarization intensities for the lymphocytes themselves.

The filtration step can introduce errors into the SCM-test results. For example undue delay in carrying out the filtration step can adversely affect the readings since the intensity levels are dependent on the time of FDA hydrolysis. In addition, the extra handling of the suspension and the filtration step itself, if not properly carried out, can result in damage to the lymphocyte membranes. This may result in the release of abnormal amounts of intracellular fluorescein into the filtrate, thus causing higher than normal background readings and a resultant reduction in test sensitivity and/or erroneous results. In addition the filtration step requires a kinetic extrapolation to arrive at fluorescence intensities which, if not carried out properly, may lead to the introduction of a bias or error into the SCM-test results.

The spectrum of intracellular fluorescein fluorescence, that is the fluorescence from within the cell, and the spectrum of background and extracellular fluorescein fluorescence are bathochromically shifted with respect to one another. Accordingly, the background and the intracellular fluorescence emissions can be regarded as originating from two different fluorophores. On this basis and in accordance with the invention, a method has been developed for measuring the vertical and horizontal polarized fluorescein fluorescence emissions at two wavelengths; at a first wavelength selected for the measurement of the intracellular fluorescence emissions and at a second wavelength within the range of wavelengths determined by the bathochromic shift. The background fluorescence intensity is determined without the necessity of a separate filtration step. The method of the present invention, which can be analyzed and expressed mathematically thus lends itself to automated methods for determining the background fluorescence emissions from a suspension of lymphocytes. As used hereinafter the terms "background" and "extracellular" will be used interchangeably when referring to fluorescence emissions.

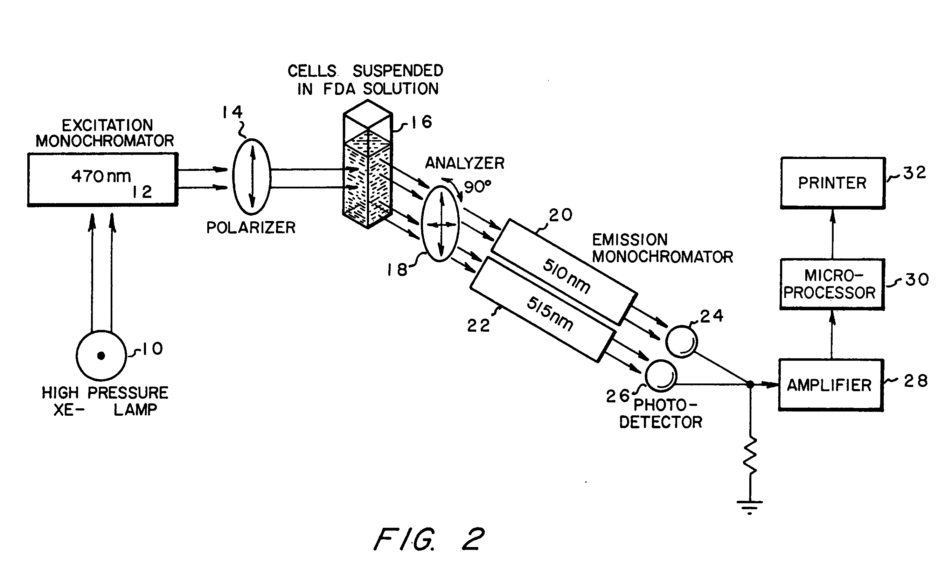

In accordance with the method of the invention the horizontal and vertical components of the fluorescence emissions from a suspension of SCM-responding lymphocytes which have been treated with a fluorogenic agent and exposed to excitation energy are measured and recorded at the first wavelength and at the second wavelength. Preferably this is accomplished simultaneously by the use of more than one photomultiplier as will be described in more detail in connection with FIG 2. The intensities may also be measured and recorded alternately between the two wavelengths. With respect to the first and the second wavelength, we have found that with fluorescein fluorescence the second wavelength is between about 5 and about 10 nm higher than the first wavelength.

The total intensity of the fluorescenee emissions at the first wavelength and the second wavelength is determined as the sum of the vertically and horizontally polarized fluorescence emissions at each of the first and second wavelengths in accordance with the following relationship:

$$(2) \qquad I_{total} = I_V + 2(I_H \times G)$$

where $I_V$ and $I_H$ are the vertically and the horizontally polarized fluorescence emission intensities and G is a correction factor for the unequal transmission of the horizontal and vertical components of the polarized light through the optical system of the particular equipment used.

A factor representing the fraction of said total intensity of said fluorescence emission due to extracellular fluorescence, is then determined by the relationship:

$$(3) \qquad F = \frac{K_b - Q}{K_b - K_a}$$

where Kb is 1.135, Ka is 1.048 and Q denotes the total intensity at the second wavelength divided by the total intensity at the first wavelength.

$K_a$ is a constant for the equipment used and is the mean value of actual measurements on the equipment of fluorescence intensities at the first and second wavelengths for filtrates of lymphocyte suspensions. $K_b$ which is a constant for the equipment utilized, is the mean value of the intracellular fluorescence intensity at the second wavelength divided by the intracellular fluorescence intensity at the first wave length. These values are determined for each fluorescence spectrophotometer and for each wavelength pair utilized in the test procedure.

In the embodiment of the invention set forth in the examples, the first wave length ($I_1$) is 510 nm. A bathochromic shift of 5nm is selected so that the second wavelength ($I_2$) is 515 nm. The extracellular fluorescence intensity in the vertical and horizontal planes is then derived by the following relationships:

$$(4) \qquad I_{V(\lambda 1)} = \frac{I_{tot(\lambda 1)} \times F}{1 + 2\left[(1 - P_k)/(1 + P_k)\right]}$$

$$(5) \qquad I_{H(\lambda 1)} = \frac{I_{tot(\lambda 1)} \times F}{\left(2 + \dfrac{1 + P_k}{1 - P_k}\right) \times G}$$

where $I_{V(\lambda 1)}$ and $I_{H(\lambda 1)}$ are the extracellular intensities at the first wavelength ($\lambda_1$), $I_{tot(\lambda 1)}$ is the total suspension intensity at wavelength ($I_1$), F is the factor developed in (2) above, G is a correction factor for the unequal transmission of the horizontal and vertical components of the polarized light through the optical system of the particular equipment used and $P_k$ is an extracellular fluorescence polarization value constant derived by the relationship:

$$P_k = \frac{I_{V\ filtrate} - G \times I_{H\ filtrate}}{I_{V\ filtrate} + G \times I_{H\ filtrate}}$$

Using fluorescein as the fluorogenic agent, the value of $P_k$ has been experimentally determined to be 0.0254 at 27°C for lymphatic suspensions.

The extracellular intensities for the vertical and horizontal fluorescent intensities, $I_{Vf}$ and $I_{Hf}$, are subtracted from the total vertical and horizontal fluorescence emission intensities to arrive at the vertical and horizontal intensities for the intracellular fluorescence emissions used in (1) above to calculate P. As mentioned above the mathematical analysis lends itself to automation so that the entire analysis can be done within the fluorescence spectrophotometer or its ancillary equipment and corrected for in the final output signal.

Referring to FIG 2 there is a schematic illustration of a spectrophotometer arrangement used for the measurement of SCM on cell suspensions in accordance with the present invention wherein the excitation source 10 is a suitable light source such as a Xenon lamp. Suitable means such as an optical filter or as shown, an excitation monochromator 12 is disposed in the excitation light path for passing light at a selected excitation wavelength to a fixed polarization filter 14 which transmits only vertically polarized light to the sample lymphocyte/fluorescein suspension 16. Upon exposure to the vertically polarized excitation light the fluorescein molecules fluoresce and the fluorescence emission id directed through a second polarization filter 18 which is fitted with an automatic filter position changer for rotating the orientation of the polarization axis between a vertical and a horizontal plane. The fluorescence emission being thus divided into a vertical and horizontal component then passes through wavelength selection means such as optical filters or as illustrated a pair of emission monochromators 20 and 22, one of which is selected to pass only light at the first wavelength ($I_1$) and the other to pass light at the second wavelength ($I_2$). A pair of photodetectors 24 and 26 are placed in the light path of the emission monochromators 20 and 22 respectively and the output from the photodetectors is fed to amplifier 28. The output from amplifier 28 is fed through a microprocessor 30 for performing the necessary mathematical functions to account for extracellular fluorescence as described above and the output therefrom is sent to a printer 32 for recording the computed intracellular fluorescein fluorescence polarization values.

The spectrophotometer utilized for SCM measurements should be one of high sensitivity and stability and should be able to compensate for fluctuations in the intensity of the excitation light since the intensity of the polarized fluorescence is recorded as a function of time and since the bulk concentration of fluorescein in the SCM measurements is only of the order of $10^{-9}$ M to M. Also, broad $10^{-10}$ band filter instruments cannot be

6

used in the SCM measurements since the excitation and emission polarization spectra of the lymphocytes show that changes in the SCM can be detected only within a narrow wage length region. The spectrophotometer must also be fitted with a thermostatically controlled cuvette holder since the fluorescein in polarization values are highly temperature dependent (e.g., about 3% per °C) and to ensure the reproducibility of results the temperature of the sample should be closely controlled, i.e. plus or minus 0.2 °C.

As illustrated in Fig. 2 the fluorescence spectrophotometer arrangement is provided with a pair of photodetectors (24 and 26) for measurement of the vertical and horizontal fluorescence intensity components at the first wavelength and at the second wavelength. However, if desired, as many as four photodetectors can be utilized so that a separate photodetector is dedicated to the horizontal and vertical intensity polarized components of fluorescence at each of the two wavelengths being measured. Alternatively, a single photodetector may be utilized to measure the horizontally and the vertically polarized components of fluorescence. Also single means such as a filter designed to alternately pass fluorescence at the first wavelength and the second wavelength may be employed in place of two filters or monochromators.

## Example

SCM-responding lymphocytes were separated from samples of peripheral blood of donors in accordance with the method described in our publication in Europ. J. Cancer, supra, by layering a sample of the blood from which the phagocytes had been removed on a Ficoll-Triosil density gradient solution having a density of $1.081 g/cm^3$ at 25°C and an osmolality of 0.320osm/kg followed by centrifugation at 550 $g_{AV}$ at 20°C. In accordance with the SCM-procedure for cancer testing, an aliquot of lymphocytes was exposed to phytohaemagglutinin (PHA) and a second aliquot of lymphocytes from the same sample were exposed to an extract comprising pooled proteins from a variety of malignant tissue, referred to as cancer basic protein (CaBP). In accordance with our test method the ratio of the polarization value of an aliquot of lymphocytes incubated with CaBP to the polarization value of an aliquot of lymphocytes from the same donor incubated with PHA is an indication of the presence or absence of cancer in the donor. This ratio, referred to as the SCM response ratio (RR) has been found to have a mean value of between about 1.1 to about 1.8 in healthy donors as compared to an RR of between about 0.5 to about 0.95 for patients with malignant disorders.

After incubation with the CaBP antigen and formation of the lymphocyte/FDA suspension in accordance with our method as reported in the Europ. J. Cancer, cited above, polarization values for the lymphocyte suspensions were determined on a Perkin-Elmer fluorescence spectrophotometer, model MPF-4 by our reported method in which the total polarized fluorescence emission intensities of the lymphocyte suspension were measured in the horizontal and vertical plane followed by filtration and measurement the polarized fluorescence emission intensities of the filtrate in the horizontal and vertical planes to compensate for the extracellular fluorescence. The excitation wavelength was 470nm and the first emission wavelength was 510nm.

Prior to the filtration step, however, the fluorescence emissions from each of the samples were measured an the same equipment at a second emission wavelength of 515 nm. Using the method of the present invention to compensate for background fluorescence polarization values (P) and the SCM response ratios were calculated. These results are compared with the polarization values and the response ratios of the same suspensions obtained by the standard technique in the following table in which the polarization values and the SCM response ratios obtained by the method of the invention are listed in the column entitled "BSM Technique" and the results obtained by the standard technique are in the column entitled "Standard Technique".

## Table

| No. | Antigen | Standard Technique | | BSM Technique | |
|-----|---------|----------|------|----------|------|
| | | P | RR | P | RR |
| 1 | PHA | 0.154 | | 0.128 | |
| | CaBP | 0.210 | 1.36 | 0.180 | 1.41 |
| 2 | PHA | 0.137 | | 0.122 | |
| | CaBP | 0.195 | 1.42 | 0.189 | 1.55 |
| 3 | PHA | 0.140 | | 0.133 | |
| | CaBP | 0.195 | 1.39 | 0.189 | 1.35 |
| 4 | PHA | 0.163 | | 0.161 | |
| | CaBP | 0.208 | 1.28 | 0.183 | 1.14 |
| 5 | PHA | 0.145 | | 0.170 | |
| | CaBP | 0.202 | 1.39 | 0.215 | 1.27 |
| 6 | PHA | 0.201 | | 0.215 | |
| | CaBP | 0.152 | 0.76 | 0.160 | 0.74 |
| 7 | PHA | 0.202 | | 0.208 | |
| | CaBP | 0.158 | 0.78 | 0.164 | 0.79 |
| 8 | PHA | 0.202 | | 0.196 | |
| | CaBP | 0.161 | 0.80 | 0.164 | 0.84 |

The agreement between the polarization values and the SCM response ratios obtained using the Standard Technique involving a filtration step and the method of the invention in which filtration is eliminated are within acceptable limits of accuracy predicted by an error propagation analysis. It will be noted that samples 1-5 have SCM resolution ratios on the order of 1.15 and above which indicates an absence of cancer in the donor. On the other hand the SCM resolution ratios in samples 6-8 are all well below 1.0 indicating that the donor is afflicted with cancer. These results are confirmed by actual diagnosis.

Utilizing the method of the present invention we have achieved a fluorescence measurement technique which provides at least equivalent results to the standard technique employed prior to this invention for the determination of SCM-responses of cells and we have eliminated the necessity of a separate filtration step and the problems attendant therewith to compensate for extracellular fluorescence.

Although described in connection with the SCM-test, it will be understood that the method of the invention may be applied to any procedure involving the measurement of polarized fluorescence emissions from material in a substrate which contributes background fluorescence and in which the background fluorescence emissions are bathochromically shifted with respect to the emissions to be measured. The present invention thus further provides a method of measuring polarized fluorescence emissions from a fluorescing material in an environment which contributes background fluorescence without separating said fluorescing material from said environment, said method comprising:

a. measuring horizontally and vertically polarized fluorescence emissions from said material in said environment, said measurements being taken at a first wavelength and at a second wavelength within the range of wavelengths determined by the bathochromic shift of said fluorescence emissions due to background fluorescence emissions and obtaining therefrom the total fluorescence emission of said fluorescing material in said environment at each of said wavelengths in accordance with the following relationship:

$$I_{total} = I_V + 2 (I_H \times G)$$

wherein $I_V$ and $I_H$ are the vertically and the horizontally polarized fluorescence emission intensities and G is a correction factor for the unequal transmission of said vertically and said horizontally polarized fluorescence emissions through an optical system of a fluorescence measuring instrument;

b. determining a factor (F) representing the fraction of said total intensity of said fluorescence emission due to background fluorescence, said factor F being determined according to the relationship:

$$F = \frac{K_b - Q}{K_b - K_a}$$

wherein $K_a$ is the mean value of actual measurements of the fluorescence intensity of only said background fluorescence at said second wavelength divided by the fluorescence intensity of only said fluorescence at said first wavelength, $K_b$ is the mean value of the fluorescence intensity of said fluorescing material in the absence of background fluorescence at said second wavelength divided by the fluorescence intensity of said fluorescing material in the absence of background fluorescence at said first wavelength, $K_a$ and $K_b$ are constants for the particular instrumentation utilized, and Q is the total intensity at the second wavelength divided by the total intensity at the first wavelength;

c. deriving from said factor the vertically and horizontally polarized emission intensities of said background fluorescence in accordance with the relationships;

$$I_{V(\lambda 1)} = \frac{I_{tot(\lambda 1)} \times F}{1 + 2 [(1 - P_K)/(1 + P_K)]}$$

and

$$I_{H(\lambda 1)} = \frac{I_{tot(\lambda 1)} \times F}{(2 + \frac{1 + P_K}{1 - P_K}) \times G}$$

where $I_{V(\lambda 1)}$ is the vertically polarized fluorescence emission at said first wavelength, $I_{H(\lambda 1)}$ is the horizontally polarized background fluorescence intensity at said first wavelength, $I_{tot(\lambda 1)}$ is the total intensity of said fluorescence emissions at said first wavelength, F is said factor representing the fraction of said total intensity of said fluorescence emission due to background fluorescence and $P_K$ is a constant derived from the relationship:

$$P_k = \frac{I_{V\,filtrate} - G \times I_{H\,filtrate}}{I_{V\,filtrate} + G \times I_{H\,fitrate}}$$

where $I_{Vfiltrate}$ is the vertically polarized fluorescence emission intensity of said environment from which said fluorescing material has been separated, $I_{Hfiltrate}$ is the horizontally polarized fluorescence emission intensity of said environment from which said fluorescing material has been separated and G is a correction factor for the unequal transmission of said vertically and said horizontally polarized fluorescence emissions through an optical system of a fluorescence measuring instrument; and

d. deducting said intensities of said background fluorescence from said vertically and horizontally polarized emission intensities measured as said first wavelength to obtain the vertically and horizontally polarized emission intensities due to fluorescence of said fluorescing material in the absence of background fluorescence and thereafter applying said fluorescence emission intensities of said fluorescing material in the absence of background fluorescence to calculate the polarization value of said fluorescing material in said environment.

While the invention has been described and illustrated herein with reference to certain embodiments thereof, it is to be understood that it may be otherwise embodied within the scope of the appended claims.

## Claims

1. Method for testing a sample of blood of a donor for the presence of a condition or disease in the body of the donor, said method being based upon the response of lymphocytes separated from a sample of the donor's blood in contact with a substance selected from mitogens or antigens associated with the condition or disease being test for,

the lymphocyte response being indicated by changes in the structuredness of the cytoplasmic matrix (SCM) of said lymphocytes sensitised to said substance as a result of the presence of said disease or condition in the donor, said change in the SCM being measured by the polarized intracellular fluorescence of said lymphocytes,

the method comprising:

measuring horizontally at a first wavelength and at a second wavelength and measuring vertically at said first wavelength and said second wavelength polarized fluorescence emissions from a suspension of lymphocytes in a substrate, said measurements being taken at a first wavelength and at a second wavelength within the range of wavelengths determined by the bathochromic shift of said fluorescence emissions,

obtaining therefrom the total fluorescence emission of said suspension at each of said wavelengths,

determining a factor representing the fraction of said total intensity of said fluorescence emission due to extracellular fluorescence,

deriving therefrom the vertically and horizontally polarized emission intensities of said extracellular fluorescence,

deducting said extracellular intensities from said vertically and horizontally polarized emission intensities measured at said first wavelength to obtain the vertically and horizontally polarized emission intensities due to intracellular fluorescence, and

thereafter applying said intracellular fluorescence emission intensities to calculate the polarization value (P) of said lymphocytes in said suspension.

2. The method of claim 1 wherein said total intensity of the fluorescence emissions at said first wavelength and at said second wavelength is determined by the sum of the vertically and horizontally polarized fluorescence emissions at each of said first and second wavelengths in accordance with the following relationship:

$$I_{total} = I_V + 2(I_H \times G)$$

wherein, $I_V$ and $I_H$ are the vertically and the horizontally polarized fluorescence emission intensities and G is a correction factor for the unequal transmission of said vertically and said horizontally polarized fluorescence emissions through an optical system of a fluorescence measuring instrument.

3. The method of claim 1 wherein said factor (F) representing the fraction of said total intensity of said fluorescence emission due to extracellular fluorescence, is determined by the relationship:

$$F = \frac{K_b - Q}{K_b - K_a}$$

wherein, $K_a$ is the mean value of actual measurements of the fluorescence intensity at said second wavelength divided by the fluorescence intensity at said first wavelength for filtrates of lymphocyte suspensions, $K_b$ is the mean value of the intracellular fluorescence intensity at said second wavelength divided by the intracellular fluorescence intensity at said first wavelength, $K_a$ and $K_b$ being constants for the particular instrumentation utilized, and Q is the total intensity at second wavelength divided by the total intensity at said first wavelength.

4. The method of claim 1 wherein said vertically polarized emission intensity of said extracellular fluorescence is derived according to the relationship:

$$I_{V (\lambda 1)} = \frac{I_{tot(\lambda 1)} \times F}{1 + 2[(1 - P_k) / (1 + P_k)]}$$

where $I_{V(\lambda 1)}$ is the vertically polarized extracellular intensity at said first wavelength, $I_{tot(\lambda 1)}$ is the total intensity of said fluorescence emissions at said first wavelength, F is said factor representing the fraction of said total intensity of said fluorescence emission due to extracellular fluorescence and $P_k$ is a constant derived from the relationship:

$$P_k = \frac{I_{V\,filtrate} - G \times I_{H\,filtrate}}{I_{V\,filtrate} + G \times I_{H\,filtrate}}$$

where $I_V$ filtrate is the vertically polarized fluorescence emission intensity of said fluorogenic substrate from which said lymphocytes have been filtered, $I_{H\,filtrate}$ is the horizontally polarized fluorescence emission intensity of said fluorogenic substrate from which said lymphocytes have been filtered and G is a correction factor for the unequal transmission of said vertically and said horizontally polarized fluorescence emissions through an optical system of a fluorescence measuring instrument.

5. The method of claim 1 wherein said horizontally polarized emission intensity of said extracellular fluorescence is derived according to the relationship:

EP 0 272 291 B1

$$I_{H(\lambda 1)} = \frac{I_{tot(\lambda 1)} \times F}{\left(2 + \dfrac{1 + P_k}{1 - P_k}\right) \times G}$$

where $I_{H(\lambda 1)}$ is the horizontally polarized extracellular intensity at said first wavelength, $I_{tot(\lambda 1)}$ is the total intensity of said fluorescence emissions at said first wavelength, F is said factor representing the fraction of said total intensity of said fluorescence emission due to extracellular fluorescence and $P_k$ is a constant derived from the relationship:

$$P_k = \frac{I_{V\,filtrate} - G \times I_{H\,filtrate}}{I_{V\,filtrate} + G \times I_{H\,filtrate}}$$

where $I_{V\,filtrate}$ is the vertically polarized fluorescence emission intensity of said fluorogenic substrate from which said lymphocytes have been filtered, $I_{H\,filtrate}$ is the horizontally polarized fluorescence emission intensity of said fluorogenic substrate from which said lymphocytes have been filtered and G is a correction factor for the unequal transmission of said vertically and said horizontally polarized fluorescence emissions through an optical system of a fluorescence measuring instrument.

6. The method of claim 4 or 5 wherein $P_k$ is 0.0254 at 27°C.

7. The method of any one of the preceding claims wherein the said fluorogenic substrate is fluorescein diacetate.

8. The method of claim 7 wherein said fluorescence emission spectrum due to extracellular fluorescence emissions is bathochromically shifted between about 4nm and about 10nm with respect to said intracellular fluorescence emissions.

9. The method of claim 7 wherein said first wavelength is 510nm and said second wavelength is selected to be between 515nm and 520nm.

10. The method of claim 9 wherein said second wavelength is 515nm.

11. The method of claim 7 wherein said first wavelength is 527nm and said second wavelength is selected to be between 532nm and 537nm.

12. The method of claim 11 wherein said second wavelength is 532nm.

13. Method of measuring polarized fluorescence emissions from a suspension of fluorescing cells in a substrate which contributes background fluorescence, without separating said fluorescing cells from said substrate, said method comprising:

a. measuring horizontally and vertically polarized fluorescence emissions from said suspension, said measurements being taken at a first wavelength and at a second wavelength within the range of wavelengths determined by the bathochromic shift of said fluorescence emissions due to extracellular fluorescence emissions and obtaining therefrom the total fluorescence emission of said suspension at each of said wavelengths in accordance with the following relationship;

$$I_{total} = I_V + 2(I_H \times G)$$

wherein $I_V$ and $I_H$ are the vertically and the horizontally polarized fluorescence emission intensities and G is a correction factor for the unequal transmission of said vertically and said horizontally polarized fluorescence emissions through an optical system of a fluorescence measuring instrument;

b. determining a factor (F) representing the fraction of said total intensity of said fluorescence emission due to extracellular fluorescence, said factor F being determined according to the relationship:

$$F = \frac{K_b - Q}{K_b - K_a}$$

wherein $K_a$ is the mean value of actual measurements of the fluorescence intensity at said second wavelength divided by the fluorescence intensity at said first wavelength for filtrates of lymphocyte suspensions, $K_b$ is the mean value of the intracellular florescence intensity at said second wavelength divided by the intracellular fluorescence intensity at said first wavelength, $K_a$ and $K_b$ being constants for the particular instrumentation utilized, and Q is the total intensity at the second wavelength divided by the total intensity at the first wavelength;

c. deriving from said factor the vertically and horizontally polarized emission intensities of said extracellular fluorescence in accordance with the relationships;

11

$$I_{V(\lambda 1)} = \frac{I_{tot(\lambda 1)} \times F}{1 + 2[(1 - P_k/1 + P_k)]}$$

and

$$I_{H(\lambda 1)} = \frac{I_{tot(\lambda 1)} \times F}{\left(2 + \dfrac{1 + P_k}{1 - P_k}\right) \times G}$$

where $I_V(\lambda 1)$ is the vertically polarized fluorescence emission intensity at said first wavelength, $I_{H(\lambda 1)}$ is the horizontally polarized extracellular intensity at said first wavelength, $I_{tot(\lambda 1)}$ is the total intensity of said fluorescence emissions at said first wavelength, F is said factor representing the fraction of said total intensity of said fluorescence emission due to extracellular fluorescence and $P_k$ is a constant derived from the relationship:

$$P_k = \frac{I_{V\,filtrate} - G \times I_{H\,filtrate}}{I_{V\,filtrate} + G \times I_{H\,filtrate}}$$

where $I_{V\,filtrate}$ is the vertically polarized fluorescence emission intensity of said substrate from which said lymphocytes have been filtered, $I_{V\,filtrate}$ is the horizontally polarized fluorescence emission intensity of said substrate from which said lymphocytes have been filtered and G is a correction factor for the unequal transmission of said vertically and said horizontally polarized fluorescence emissions through an optical system of a fluorescence measuring instrument; and

d. deducting said extracellular intensities from said vertically and horizontally polarized emission intensities measured at said first wavelength to obtain the vertically and horizontally polarized emission intensities due to intracellular fluorescence and thereafter applying said intracellular fluorescence emission intensities to calculate the polarization value (P) of said cells in said suspension.

14. Method of measuring polarized fluorescence emissions from a fluorescing material in an environment which contributes background fluorescence without separating said fluorescing material from said environment, said method comprising:

a. measuring horizontally and vertically polarized fluorescence emissions from said material in said environment, said measurements being taken at a first wavelength and at a second wavelength within the range of wavelengths determined by the bathochromic shift of said fluorescence emissions due to background fluorescence emissions and obtaining therefrom the total fluorescence emission of said fluorescing material in said environment at each of said wavelengths in accordance with the following relationship:

$$I_{total} = I_V + 2(I_H \times G)$$

wherein $I_V$ and $I_H$ are the vertically and the horizontally polarized fluorescence emission intensities and G is a correction factor for the unequal transmission of said vertically and said horizontally polarized fluorescence emissions through an optical system of a fluorescence measuring instrument;

b. determining a factor (F) representing the fraction of said total intensity of said fluorescence emission due to background fluorescence, said factor F being determined according to the relationship:

$$F = \frac{K_b - Q}{K_b - K_a}$$

wherein $K_a$ is the mean value of actual measurements of the fluorescence intensity of only said background fluorescence at said second wavelength divided by the fluorescence intensity of only said fluorescence at said first wavelength, $K_b$ is the mean value of the fluorescence intensity of said fluorescing material in the absence of background fluorescence at said second wavelength divided by the fluorescence intensity of said fluorescing material in the absence of background fluorescence at said first wavelength, $K_a$ and $K_b$ are constants for the particular instrumentation utilized, and Q is the total intensity at the second wavelength divided by the total intensity at the first wavelength;

c. deriving from said factor the vertically and horizontally polarized emission intensities of said background fluorescence in accordance with the relationships;

$$I_{V(\lambda 1)} = \frac{I_{tot(\lambda 1)} \times F}{1 + 2[(1 - P_k)/(1 + P_k)]}$$

$$I_{H(\lambda 1)} = \frac{I_{tot(\lambda 1)} \times F}{\left(2 + \dfrac{1 + P_k}{1 - P_k}\right) \times G}$$

where $I_{V(\lambda 1)}$ is the vertically polarized fluorescence emission at said first wavelength, $I_{H(\lambda 1)}$ is the horizontally polarized background fluorescence intensity at said first wavelength, $I_{tot(\lambda 1)}$ is the total intensity of said fluorescence emissions at said first wavelength, F is said factor representing the fraction of said total intensity of said fluorescence emission due to background fluorescence and $P_k$ is a constant derived from the relationship:

$$P_k = \frac{I_{V\,filtrate} - G \times I_{H\,filtrate}}{I_{V\,filtrate} + G \times I_{H\,filtrate}}$$

where $I_{V\,filtrate}$ is the vertically polarized fluorescence emission intensity of said environment from which said fluorescing material has been separated, $I_{H\,filtrate}$ is the horizontally polarized fluorescence emission intensity of said environment from which said fluorescing material has been separated and G is a correction factor for the unequal transmission of said vertically and said horizontally polarized fluorescence emissions through an optical system of a fluorescence measuring instrument; and

d. deducting said intensities of said background fluorescence from said vertically and horizontally polarized emission intensities measured as said first wavelength to obtain the vertically and horizontally polarized emission intensities due to fluorescence of said fluorescing material in the absence of background fluorescence and thereafter applying said fluorescence emission intensities of said fluorescing material in the absence of background fluorescence to calculate the polarization value (P) of said fluorescing material in said environment.

## Patentansprüche

1. Verfahren zum Testen einer Blutprobe von einem Spender auf das Vorhandensein eines Zustandes oder einer Krankheit im Körper des Spenders, wobei das Verfahren auf der Reaktion von einer Probe des Spenderblutes abgetrennten Lymphozyten in Berührung mit einer Substanz beruht, die dem Zustand oder der Krankheit zugeordnet ist, der bzw. die durch den Test nachgewiesen werden soll,

wobei die Lymphozytenreaktion daran erkennbar ist, daß auf Grund des Vorhandenseins der genannten Krankheit oder des genannten Zustandes beim Spender Veränderungen der Strukturiertheit der für die genannte Substanz sensibilisierten Zytoplasmamatrix (SCM) stattfinden, und diese Veränderung der SCM mittels der polarisierten intrazellulären Fluoreszenz der Lymphozyten gemessen wird,

wobei das Verfahren folgende Maßnahmen umfaßt:

polarisierte Fluoreszenzemissionen von einer Suspension von Lymphozyten in einem Substrat werden bei einer ersten Wellenlänge und einer zweiten Wellenlänge horizontal gemessen und bei der ersten Wellenlänge und der zweiten Wellenlänge vertikal gemessen, wobei diese Messungen bei einer ersten und einer zweiten Wellenlänge in dem durch die bathochrome Farbverschiebung der Fluoreszenzemissionen bestimmten Wellenbereich vorgenommen werden,

davon die Gesamtfluoreszenzemission der Suspension bei jeder genannten Wellenlängen abgeleitet wird,

ein den auf extrazelluläre Fluoreszenz zurückzuführenden Teil der Gesamtintensität der Fluoreszenzemission darstellender Faktor bestimmt wird,

davon die Intensitäten der vertikal und der horizontal polarisierten Emission der extrazellulären Fluoreszenz abgeleitet wird,

durch Subtraktion der Intensitäten der extrazellulären Emissionen von den bei ersten Wellenlänge gemessenen Intensitäten der vertikal und der horizontal polarisierten Emission die auf die intrazelluläre Fluoreszenz zurückzuführende vertikal und horizontal polarisierte Emission bestimmt werden und

danach aus den Intensitäten der intrazellulären Fluoreszenzemission der Polarisationswert (P) der Lymphozyten in der Suspension berechnet wird.

2. Verfahren nach Anspruch 1, dadurch gekennzeichnet, daß die Gesamtintensität der Fluoreszenzemissionen mit der ersten Wellenlänge aus der Summe der vertikal und horizontal polarisierten Fluoreszenzemission mit der ersten und der zweiten Wellenlänge nach der Beziehung

$$I_{tot} = I_V + 2(I_H \times G)$$

bestimmt wird, in der $I_V$ und $I_H$ die Intensitäten der vertikal bzw. horizontal polarisierten Fluoreszenzemission sind und G ein Korrekturfaktor zur Berücksichtigung der ungleichen Übertragung der vertikal und der horizontal polarisierten Fluoreszenzemission durch die Optik eines Fluoreszenzmeßinstruments ist.

3. Verfahren nach Anspruch 1, dadurch gekennzeichnet, daß der den auf die extrazelluläre Fluoreszenz zurückzuführenden Teil der Gesamtintensität der Fluoreszenzemission darstellende Faktor (F) durch die Beziehung

$$F = \frac{K_b - Q}{K_b - K_a}$$

bestimmt wird, in der $K_a$ für Filtratsuspensionen der durch die Fluoreszenzintensität mit der ersten Wellenlänge geteilte Mittelwert der gemessenen Istwerte der Fluoreszenzintensität mit der zweiten Wellenlänge ist, $K_b$ der durch die Intensität der intrazellulären Fluoreszenz mit der ersten Wellenlänge geteilte Mittelwert der intrazellulären Fluoreszenzintensität mit der zweiten Wellenlänge ist, $K_a$ und $K_b$ Konstanten der jeweils verwendeten Meßeinrichtung sind und Q die durch die Gesamtintensität mit der ersten Wellenlänge geteilte Gesammtintensität mit der zweiten Wellenlänge ist.

4. Verfahren nach Anspruch 1, dadurch gekennzeichnet, daß die Intensität der vertikal polarisierten Emission nach der Beziehung

$$I_{V (\lambda 1)} = \frac{I_{tot(\lambda 1)} \times F}{1 + 2 [(1 - P_k) / (1 + P_k)]}$$

bestimmt wird, in der $I_{V(\lambda 1)}$ die Intensität der vertikal polarisierten extrazellulären Fluoreszenzemission mit der ersten Wellenlänge ist, $I_{tot( 1)}$ die Gesamtintensität der Fluoreszenzemission mit der ersten Wellenlänge ist, F der den auf die extrazelluläre Fluoreszenz zurücksuführenden Teil der Gesamtintensität der Fluoreszenzemission darstellende Faktor ist und $P_k$ eine Kosntante ist, die nach der Beziehung

$$P_k = \frac{I_{V\,Filtrat} - G \times I_{H\,Filtrat}}{I_{V\,Filtrat} + G \times I_{H\,Filtrat}}$$

bestimmt wird, in der $I_{V\,Filtrat}$ die Intensität der vertikal polarisierten Fluoreszenzemission des fluorgenen Substrates ist, aus dem die Lymphozyten abfiltriert worden sind, $I_{H\,Filtrat}$ die Intensität der horizontal polarisierten Fluoreszenz des fluorgenen Substrates ist, aus dem die Lymphozyten abfiltriert worden sind, und G ein Korrekturfaktor zur Berücksichtigung der ungleichen Übertragung der vertikal und der horizontal polarisierten Fluoreszenzemission durch die Optik eines Fluoreszenzmeßinstruments ist.

5. Verfahren nach Anspruch 1, dadurch gekennzeichnet, daß die Intensität der horizontal polarisierten Emission der extrazellulären Fluoreszenz nach der Beziehung

$$I_{H(\lambda 1)} = \frac{I_{tot(\lambda 1)} \times F}{\left(2 + \dfrac{1 + P_k}{1 - P_k}\right) \times G}$$

bestimmt wird, in der $I_{H(\lambda 1)}$ die Intensität der horizontal polarisierten extrazellulären Intensität mit der ersten Wellenlänge ist, $I_{tot(1)}$ die Gesamtintensität der Fluoreszenzemission mit der ersten Wellenlänge ist, F der den auf die extrazelluläre Fluoreszenz zurückzuführenden Teil der Gesamtintensität der Fluoreszenzemission darstellende Faktor ist und $P_k$ eine Konstante ist, die nach der Beziehung

$$P_k = \frac{I_{V\,Filtrat} - G \times I_{H\,Filtrat}}{I_{V\,Filtrat} + G \times I_{H\,Filtrat}}$$

bestimmt wird, in der $I_{V\,Filtrat}$ die Intensität der vertikal polarisierten Fluoreszenzemission des fluorgenen Substrates ist, aus dem die Lymphozyten abfiltriert worden sind, $I_{H\,Filtrat}$ die Intensität der horizontal polarisierten Fluoreszenz des fluorgenen Substrates ist, aus dem die Lympohzyten abfiltriert worden sind, und G ein Korrekturfaktor zur Berücksichtung der ungleichen Übertragung der vertikal und der horizontal polarisierten Fluoreszenzemission durch die Optik eines Fluoreszenzmeßinstruments ist.

6. Verfahren nach Anspruch 4 oder 5, dadurch gekennzeichnet, daß $P_k$ bei 27°C 0,0254 ist.

7. Verfahren nach einem der vorgergehenden Ansprüche, dadurch gekennzeichnet, daß das fluorogene Substrat Fluoresceindiacetat ist.

8. Verfahren nach Anspruch 7, dadurch gekennzeichnet, daß das auf die extrazelluläre Fluoreszenzemissionen zurückzuführende Fluoreszenzemissionsspektrum gegenüber den intrazellulären Fluoreszenzemissionen um etwa 4 nm und etwa 10 nm bathochrom verschoben ist.

9. Verfahren nach Anspruch 7, dadurch gekennzeichnet, daß die erste Wellenlänge 510 nm ist und die zweite Wellenlänge zwischen 515 nm und 520 nm gewählt wird.

10. Verfahren nach Anspruch 9, dadurch gekennzeichnet, daß die zweite Wellenlänge 515 nm ist.

11. Verfahren nach Anspruch 7, dadurch gekennzeichnet, daß die erste Wellenlänge 527 nm ist und die zweite Wellenlänge zwischen 532 nm und 537 nm gewählt wird.

12. Verfahren nach Anspruch 11, dadurch gekennzeichnet, daß die zweite Wellenlänge 532 nm ist.

13. Verfahren zum Messen von polarisierten Fluoreszenzemissionen einer Suspension von fluoreszierenden Zellen in einem Hintergrundfluoreszenz beitragenden Substrat, ohne daß die fluoreszierenden Zellen von dem Substrat abgetrennt werden, wobei in dem Verfahren

    a. die horizontal und vertikal polarisierten Fluoreszenzemission der Suspension bei einer ersten und einer zweiten Wellenlänge in dem Wellenlängenbereich gemessen werden, der durch die auf extrazelluläre Fluoreszenzemissionen verursachten bathochromen Farbverschiebung der Fluoreszenzemissionen bestimmt wird, davon die Gesamtfluoreszenzemission der Suspension mit jeder der genannten Wellenlängen nach der Beziehung

$$I_{tot} = I_V + 2(I_H \times G)$$

bestimmt wird, in der $I_V$ und $I_H$ die Intensitäten der vetikal bzw. horizontal polarisierten Fluoreszenzemission sind und G ein Korrekturfaktor zur Berücksichtigung der ungleichen Übertragung der vertikal und der horizontal polarisierten Fluoreszenzemission durch die Optik eines Fluoreszenzmeßinstruments ist;

    b. ein den auf die extrazelluläre Fluoreszenz zurückzuführenden Teil der Gesamtintensität der Fluoreszenzemission darstellende Faktor (F) durch die Beziehung

$$F = \frac{K_b - Q}{K_b - K_a}$$

bestimmt wird, in der $K_a$ für Filtratsuspension der durch die Fluoreszenzintensität mit der ersten Wellenlänge geteilte Mittelwert der gemessenen Istwerte der Fluoreszenzintensität mit der zweiten Wellenlänge ist, $K_b$ der durch die Intensität der intrazellulären Fluoreszenz mit der ersten Wellenlänge geteilte Mittelwert der intrazellulären Fluoreszenzintensität mit der zweiten Wellenlänge ist, $K_a$ und $K_b$ Konstanten der jeweils verwendeten Meßeinrichtung sind und Q die durch die Gesamtintensität mit der ersten Wellenlänge geteilte Gesamtintensität mit der zweiten Wellenlänge ist;

    c. von dem genannten Faktor die Intensitäten der vertikal und der horizontal polarisierten Emission der extrazellulären Fluoreszenz nach den Beziehungen

$$I_{V(\lambda 1)} = \frac{I_{tot(\lambda 1)} \times F}{1 + 2\left[(1 - P_k / 1 + P_k)\right]}$$

und

$$I_{H(\lambda 1)} = \frac{I_{tot(\lambda 1)} \times F}{\left(2 + \dfrac{1 + P_k}{1 - P_k}\right) \times G}$$

abgeleitet werden, in denen $I_{V(\lambda 1)}$ die Intensität der vertikal polarisierten extrazellulären Fluoreszenzemission mit der ersten Wellanlänge ist, $I_{H(\lambda 1)}$ die Intensität der horizontal polarisierten extrazellulären Intensität mit der ersten Wellenlänge ist, $I_{tot(1)}$ die Gesamtintensität der Fluoreszenzemission mit der ersten Wellenlänge ist, F der den auf die extrazelluläre Fluoreszenz zurückzuführenden Teil der Gesamtintensität der Fluoreszenzemission darstellende Faktor ist und $P_k$ eine Konstante ist, die nach der Beziehung

$$P_k = \frac{I_{V\,Filtrat} - G \times I_{H\,Filtrat}}{I_{V\,Filtrat} + G \times I_{H\,Filtrat}}$$

bestimmt wird, in der $I_{V\,Filtrat}$ die Intensität der vertikal polarisierten Fluoresezenzemission des fluorgenen Substrates ist, aus dem die Lymphozyten abfiltriert worden sind, $I_{V\,Filtrat}$ die Intensität der horizontal polarisierten Fluoreszenz des fluorgenen Substrates ist, aus dem die Lymphozyten abfiltriert worden sind, und

15

G ein Korrekturfaktor zur Berücksichtigung der ungleichen Übertragung der vertikal und der horizontal polarisierten Fluoreszenzemission durch die Optik eines Fluoreszenzmeßinstruments ist; und

d. zur Bestimmung der Intensitäten der durch die intrazelluläre Fluoreszenz bedingten vertikal und horizontal polarisierten Emission die Intensitäten der extrazellulären Emissionen von den bei der ersten Wellenlänge gemessenen Intensitäten der vertikal und der horizontal polarisierten Emission subtrahiert werden und dann die Intensitäten der intrazellulären Fluoreszenzemissionen zur Berechnung des Polarisationswertes (P) der genannten Zellen in der Suspension verwendet werden.

14. Verfahren zum Messen von polarisierten Fluoreszenzemissionen eines fluoreszierenden Materials in einer Hintergrundfluoreszenz beitragenden Umgebung, ohne daß das fluoreszierende Material von der Umgebung getrennt wird, wobei in dem Verfahren:

a. die horizontal und vertikal polarisierte Fluoreszenzemission des genannten Materials in der genannten Umgebung bei einer ersten und einer zweiten Wellenlänge in dem Wellenlängenbereich gemessen werden, der durch die auf Hintergrundfluoreszenzemission nach der Beziehung

$$I_{tot} = I_V + 2(I_H \times G)$$

bestimmt wird, in der $I_V$ und $I_H$ die Intensitäten der vertikal bzw. horizontal polarisierten Fluoreszenzemission sind und G ein Korrekturfaktor zur Berücksichtigung der ungleichen Übertragung der vertikal und der horizontal polarisierten Fluoreszenzemission durch die Optik eines Fluoreszenzmeßintruments ist;

b. ein den Hintergrundfluoreszenz zurückzuführenden Teil der Gesamtintensität der Fluoreszenzemission darstellende Faktor (F) durch die Beziehung

$$F = \frac{K_b - Q}{K_b - K_a}$$

bestimmt wird, in der $K_a$ der durch die Fluoreszenzintensität nur der Hintergrundfluoreszenz mit der ersten Wellenlänge geteilte Mittelwert der gemessenen Istwerte der Fluoreszenzintensität nur der Hintergrundfluoreszenz ist, $K_b$ der durch die Fluoreszenzintensität des fluoreszierenden Materials mit der ersten Wellenlänge bei Nichtvorhandensein vn Hintergrundfluoreszenz geteilte Mittelwert der Fluoreszenzintensität des fluoreszierenden Materials bei Nichtvorhandensein mit der zweiten Wellenlänge bei Nichtvorhandensein von Hintergrundfluoreszenz ist, $K_a$ und $K_b$ Konstanten der jeweils verwendeten Meßeinrichtung sind und Q die durch die Gesamtintensität mit der ersten Wellenlänge geteilte Gesamtintensität mit der zweiten Wellenlänge ist;

c. von dem genannten Faktor die Intensitäten der vertikal und der horizontal polarisierten Emission de genannten Hintergrundfluoreszenz nach den Beziehungen

$$I_{V(\lambda 1)} = \frac{I_{tot(\lambda 1)} \times F}{1 + 2[(1 - P_k)/(1 + P_k)]}$$

und

$$I_{H(\lambda 1)} = \frac{I_{tot(\lambda 1)} \times F}{\left(2 + \dfrac{1 + P_k}{1 - P_k}\right) \times G}$$

abgeleitet werden, in denen $I_{H(\lambda 1)}$ die Intensität der horizontal polarisierten Hintergrundfluoreszenzintensität mit der ersten Wellenlänge ist, $I_{V(\lambda 1)}$ die Intensität der vertikal polarisierten extrazellulären Fluoreszenzemission mit der ersten Wellenlänge ist, $I_{tot(1)}$ die Gesamtintensität der Fluoreszenzemission mit der ersten Wellenlänge ist, F der den auf Hintergrundfluoreszenz zurückzuführenden Teil der Gesamtintensität der Fluoreszenzemission darstellende Faktor ist und $P_k$ eine Konstante ist, die nach der Beziehung

$$P_k = \frac{I_{V\,Filtrat} - G \times I_{H\,Filtrat}}{I_{V\,Filtrat} + G \times I_{H\,Filtrat}}$$

bestimmt wird, in der $I_{V\,Filtrat}$ die Intensität der vertikal polarisierten Fluoreszenzemission des fluorgenen Substrates ist, aus dem die Lymphozyten abfiltriert worden sind, $I_{H\,Filtrat}$ die Intensität der horizontal polarizierten Fluoreszenz des fluorgenen Substrates ist, aus dem die Lymphozyten abfiltriert worden sind, und G ein Korrekturfaktor zur Berücksichtigung der ungleichen Übertragung der vertikal und der horizontal polarisierten Fluoreszenzemission durch die Optik eines Fluoreszenzmeßinstruments ist; und

d. zur Bestimmung der auf die Fluoreszenz des fluoreszierenden Materials bei Nichtvorhandensein von Hintergrundfluoreszenz die Intensitäten der Hintergrundfluoreszenz von den bei der ersten Wellenlänge gemessenen Intensitäten der vertikal und der horizontal polarisierten Emission substrahiert werden und danach die Intensitäten der Fluoreszenzemissionen des fluoreszierenden Materials bei Nichtvorhandensein von Hintergrundfluoreszenz zum Berechnen des Polarisationswertes (P) des fluoreszierenden Materials in der genannten Umgebung verwendet werden.

**Revendications**

1. Procédé en vue de tester un échantillon de sang d'un donneur pour déterminer la présence d'un état maladif ou d'une maladie dans l'organisme du donneur, ledit procédé étant fondé sur la réponse des lymphocytes, séparés d'un échantillon du sang du donneur, en contact avec une substance choisie parmi des mitogènes ou des antigènes associés à l'état maladif ou à la maladie à détecter,

la réponse lymphocytaire étant indiquée par les changements dans l'état la structure de la matrice cytoplasmique (ESMC) desdits lymphocytes sensibilisés à ladite substance du fait de la présence de ladite maladie ou état maladif chez le donneur, ledit changement dans le ESMC étant mesuré par la fluorescence intracellulaire polarisée desdits lymphocytes,

le procédé consistant:

à mesurer horizontalement, à une première longueur d'onde et à une seconde longueur d'onde, et à mesurer verticalement, à ladite première longueur d'onde et à ladite seconde longueur d'onde, les émissions de fluorescence polarisées d'une suspension de lymphocytes dans un substrat, lesdites mesures étant prises à une première longueur d'onde et à une seconde longueur d'onde dans la plage des longueurs d'onde déterminées par le décalage bathochromique desdites émissions de fluorescences,

à obtenir à partir de celles-ci l'émission totale de fluorescence de ladite suspension à chacune desdites longueurs d'onde,

à déterminer un facteur représentant la fraction de ladite intensité totale de ladite émission de fluorescence due à la fluorescence extra-cellulaire,

à déduire à partir de celui-ci les intensités d'émission polarisée verticalement et horizontalement de ladite fluorescence extra-cellulaire,

à retrancher lesdites intensités extra-cellulaires desdites intensités d'émission polarisée verticalement et horizontalement mesurées à ladite première longueur d'onde pour obtenir les intensités d'émission polarisée verticalement et horizontalement dues à la fluorescence intracellulaire, et

ensuite à utiliser lesdites intensités d'émission de fluorescence intracellulaire pour calculer la valeur (P) de polarisation desdits lymphocytes dans ladite suspension.

2. Procédé selon la revendication 1, dans lequel ladite intensité totale d'émission de fluorescence à ladite première longueur d'onde et à ladite seconde longueur d'onde est déterminée par l'addition des émissions de fluorescence polarisées verticalement et horizontalement à chacune desdites première et seconde longueurs d'onde selon la relation suivante:

$$I_{total} = I_V + 2 (I_H \times G)$$

dans laquelle, $I_V$ et $I_H$ sont les intensités d'émission de fluorescence polarisée verticalement et horizontalement et G est un facteur de correction pour la transmission inégale desdites émissions de fluorescence polarisées horizontalementet verticalement à travers un système optique d'un instrument de mesure de fluorescence.

3. Procédé selon la revendication 1, dans lequel un facteur (F) représentant la fraction de ladite intensité totale de ladite émission de fluorescence due à la fluorescence extra-cellulaire, est déterminée par la relation:

$$F = \frac{K_b - Q}{K_b - K_a}$$

dans laquelle, $K_a$ est la valeur moyenne des mesures réelles de l'intensité de fluorescence à ladite second longueur d'onde divisée par l'intensité de fluorescence à ladite première longueur d'onde pour des filtrats de suspensions de lymphocytes, $K_b$ est la valeur moyenne de l'intensité de fluorescence intracellulaire à ladite seconde longueur d'onde divisée par l'intensité de fluorescence intracellulaire à ladite première longueur d'onde, $K_a$ et $K_b$ étant des constantes pour l'équipement d'instruments particulier utilisé, et Q est l'intensité totale à la seconde longueur d'onde divisée par l'intensité totale à ladite première longueur d'onde.

4. Procédé selon la revendication 1, dans lequel ladite intensité d'émission polarisée verticalement de ladite fluorescence extra-cellulaire est déterminée selon la relation:

$$I_{V (\lambda 1)} = \frac{I_{tot(\lambda 1)} \times F}{1 + 2 [(1 - P_k) / (1 + P_k)]}$$

dans laquelle $I_{V(\lambda 1)}$ est l'intensité extra-cellulaire polarisée verticalement à ladite première longueur d'onde, $I_{tot(\lambda 1)}$ est l'intensité totale d'émission de fluorescence à ladite première longueur d'onde, F est ledit facteur représentant la fraction de ladite intensité totale à ladite émission de fluorescence due à la fluorescence ex-

tra-cellulaire et $P_k$ est une constante déterminée selon la relation:

$$P_k = \frac{I_{V\,filtrat} - G \times I_{H\,filtrat}}{I_{V\,filtrat} + G \times I_{H\,filtrat}}$$

dans laquelle $I_{V\,filtrat}$ est l'intensité d'émission de fluorescence polarisée verticalement du substrat fluorogène duquel lesdits lymphocytes ont été filtrés, $I_{H\,filtrat}$ est l'intensité d'émission de fluorescence polarisée horizontalement dudit substrat fluorogène duquel lesdits lymphocytes ont été filtrés et G est un facteur de correction pour la transmission inégale desdites émissions de fluorescence polarisées verticalement et horizontalement à travers un système optique d'un instrument de mesure de fluorescence.

5. Procédé selon la revendication 1, dans lequel ladite intensité d'émission polarisée horizontalement de ladite fluorescence extra-cellulaire est déterminée selon la relation:

$$I_{H(\lambda 1)} = \frac{I_{tot(\lambda 1)} \times F}{\left(2 + \dfrac{1 + P_k}{1 - P_k}\right) \times G}$$

dans laquelle $I_{H(\lambda 1)}$ est l'intensité extra-cellulaire polarisée horizontalement à ladite première longueur d'onde, $I_{tot(\lambda 1)}$ est l'intensité totale d'émission de fluorescence à ladite première longueur d'onde, F est ledit facteur représentant la fraction de ladite intensité totale de ladite émission de fluorescence due à la fluorescence extra-cellulaire et $P_k$ est une constante déterminée selon la relation:

$$P_k = \frac{I_{V\,filtrat} - G \times I_{H\,filtrat}}{I_{V\,filtrat} + G \times I_{H\,filtrat}}$$

dans laquelle $I_{V\,filtrat}$ est l'intensité d'émission de fluorescence polarisée verticalement dudit substrat fluorogène duquel lesdits lymphocytes ont été filtrés, $I_{H\,filtrat}$ est l'intensité d'émission de fluorescence polarisée horizontalement dudit substrat fluorogène duquel lesdits lymphocytes ont été filtrés et G est un facteur de correction pour la transmission inégale desdites émissions de fluorescence polarisées verticalement et horizontalement à travers un système optique d'un instrument de mesure de fluorescence.

6. Procédé selon la revendication 4 ou 5, dans lequel $P_k$ vaut 0,0254 à 27°C.

7. Procédé selon l'une quelconque des revendications précédentes, dans lequel ledit substrat fluorogène est le diacétate de fluorescéine.

8. Procédé selon la revendication 7, dans lequel ledit spectre d'émission de fluorescence dû aux émissions de fluorescence extra-cellulaires est décalé de façon bathochromique entre environ 4nm et environ 10nm par rapport aux émissions de fluorescence intracellulaires.

9. Procédé selon la revendication 7, dans lequel ladite première longueur d'onde est 510nm et ladite seconde longueur d'onde est entre 515nm et 520nm.

10. Procédé selon la revendication 9, dans lequel ladite seconde longueur d'onde est 515nm.

11. Procédé selon la revendication 7, dans lequel ladite première longueur d'onde est 527nm et ladite seconde longueur d'onde est entre 532nm et 537nm.

12. Procédé selon la revendication 11, dans lequel ladite seconde longueur d'onde est 532nm.

13. Procédé de mesure d'émission de fluorescence polarisée d'une suspension de cellules fluorescentes dans un substrat qui contribue à une fluorescence de fond, sans séparation desdites cellules fluorescentes dudit substrat, ledit procédé consistant:

(a). à mesurer les émissions de fluorescence polarisées horizontalement et verticalement de ladite suspension, lesdites mesures étant prises à une première longueur d'onde et à une seconde longueur d'onde dans la plage des longueurs d'onde déterminée par le décalage bathochromique desdites émissions de fluorescence dues aux émissions de fluorescence extra-cellulaires et à obtenir à partir de celles-ci l'émission de fluorescence totale de ladite suspension à chacune desdites longueurs d'onde selon la relation suivante;

$$I_{total} = I_V + 2(I_H \times G)$$

dans laquelle, $I_V$ et $I_H$ sont les intensités d'émission de fluorescence polarisée verticalement et horizontalement et G est un facteur de correction pour la transmission inégale desdites émissions de fluorescence polarisées horizontalement et verticalement à travers un système optique d'un instrument de mesure de fluorescence;

EP 0 272 291 B1

(b). à déterminer un facteur (F) représentant la fraction de ladite intensité totale d'émission de fluorescence due à la fluorescence extra-cellulaire, ledit facteur F étant déterminé selon la relation:

$$F = \frac{K_b - Q}{K_b - K_a}$$

dans laquelle, $K_a$ est la valeur moyenne des mesures réelles de l'intensité de fluorescence à ladite seconde longueur d'onde divisée par l'intensité de fluorescence à ladite première longueur d'onde pour des filtrats de suspensions de lymphocytes, $K_b$ est la valeur moyenne de l'intensité de fluorescence intracellulaire à ladite seconde longueur d'onde divisée par l'intensité de fluorescence intracellulaire à ladite première longueur d'onde, $K_a$ et $K_b$ étant des constantes pour l'équipement d'instruments particulier utilisé, et Q est l'intensité totale à la seconde longueur d'onde divisée par l'intensité totale à la première longueur d'onde;

(c), à déduire à partir dudit facteur les intensités d'émission polarisée verticalement et horizontalement de ladite fluorescence extra-cellulaire selon les relations;

$$I_{V(\lambda 1)} = \frac{I_{tot(\lambda 1)} \times F}{1 + 2\left[(1 - P_k)/(1 + P_k)\right]}$$

et

$$I_{H(\lambda 1)} = \frac{I_{tot(\lambda 1)} \times F}{\left(2 + \dfrac{1 + P_k}{1 - P_k}\right) \times G}$$

dans lesquelles $I_{V(\lambda 1)}$ est l'intensité d'émission de fluorescence polarisée verticalement à ladite première longueur d'onde, $I_{H(\lambda 1)}$ est l'intensité extra-cellulaire polarisée horizontalement à ladite première longueur d'onde, $I_{tot(\lambda 1)}$ est l'intensité totale d'émission de fluorescence à ladite première longueur d'onde, F est ledit facteur représentant la fraction de ladite intensité totale d'émission de fluorescence due à la fluorescence extra-cellulaire et $P_k$ est une constante déterminée selon la relation:

$$P_k = \frac{I_{V\,filtrat} - G \times I_{H\,filtrat}}{I_{V\,filtrat} + G \times I_{H\,filtrat}}$$

dans laquelle $I_{V\,filtrat}$ est l'intensité d'émission de fluorescence polarisée verticalement dudit substrat duquel lesdits lymphocytes ont été filtrés, $I_{H\,filtrat}$ est l'intensité d'émission de fluorescence polarisée horizontalement dudit substrat duquel lesdits lymphocytes ont été filtrés et G est un facteur de correction pour la transmission inégale desdites émissions de fluorescence polarisées verticalement et horizontalement à travers un système optique d'un instrument de mesure de fluorescence; et

(d). à retrancher lesdites intensités extra-cellulaires desdites intensités d'émission polarisée verticalement et horizontalement mesurées à ladite première longueur d'onde pour obtenir les intensités d'émission polarisée verticalement et horizontalement dues à la fluorescence intracellulaire et ensuite à utiliser lesdites intensités d'émission de fluorescence intracellulaire pour calculer la valeur (P) de polarisation desdites cellules dans ladite suspension.

14. Procédé de mesure d'émission de fluorescence polarisée provenant d'une substance fluorescente dans un environnement qui contribue à une fluorescence de fond sans séparation de ladite substance fluorescente dudit environnement, ledit procédé consistant:

(a). à mesurer les émissions de fluorescence polarisées horizontalement et verticalement de ladite substance dans ledit environnement, lesdites mesures étant prises à une première longueur d'onde et à une seconde longueur d'onde dans la plage des longueurs d'onde déterminée par le décalage bathochromique desdites émissions de fluorescence dues aux émissions de fluorescence de fond et à déterminer à partir de celles-ci l'émission de fluorescence totale de ladite substance fluorescente dans ledit environnement à chacune desdites longueurs d'onde selon la relation suivante:

$$I_{total} = I_V + 2(I_H \times G)$$

dans laquelle, $I_V$ et $I_H$ sont les intensités d'émission de fluorescence polarisée verticalement et horizontalement et G est un facteur de correction pour la transmission inégale desdites émissions de fluorescence polarisées horizontalement et verticalement à travers un système optique d'un instrument de mesure de fluorescence;

19

(b). à déterminer un facteur (F) représentant la fraction de ladite intensité totale d'émission de fluorescence due à la fluorescence de fond, ledit facteur F étant déterminé selon la relation:

$$F = \frac{K_b - Q}{K_b - K_a}$$

dans laquelle, $K_a$ est la valeur moyenne des mesures réelles de l'intensité de fluorescence de seulement ladite fluorescence de fond à ladite seconde longueur d'onde divisée par l'intensité de fluorescence de seulement ladite fluorescence de fond à ladite première longueur d'onde, $_bb$ est la valeur moyenne de l'intensité de fluorescence de ladite substance fluorescente en l'absence de fluorescence de fond à ladite seconde longueur d'onde divisée par l'intensité de fluorescence de ladite substance fluorescente en l'absence de fluorescence de fond à ladite première longueur d'onde, $K_a$ et $K_b$ étant des constantes pour l'équipement d'instruments particulier utilisé, et Q est l'intensité totale à la seconde longueur d'onde divisée par l'intensité totale à la première longueur d'onde;

(c). à déterminer à partir dudit facteur les intensités d'émission polarisée verticalement et horizontalement de ladite fluorescence de fond selon les relations;

$$I_V(\lambda 1) = \frac{I_{tot(\lambda 1)} \times F}{1 + 2[(1 - P_k)/(1 + P_k)]}$$

et

$$I_{H(\lambda 1)} = \frac{I_{tot(\lambda 1)} \times F}{\left(2 + \dfrac{1 + P_k}{1 - P_k}\right) \times G}$$

dans lesquelles $I_{V(\lambda 1)}$ est l'émission de fluorescence polarisée verticalement à ladite première longueur d'onde, $I_{H(\lambda 1)}$ est l'intensité de fluorescence de fond polarisée horizontalement à ladite première longueur d'onde, $I_{tot(\lambda 1)}$ est l'intensité totale d'émission de fluorescence à ladite première longueur d'onde, F est ledit facteur représentant la fraction de ladite intensité totale de ladite émission de fluorescence due à la fluorescence de fond et $P_k$ est une constante déterminée selon la relation:

$$P_k = \frac{I_{V\,filtrat} - G \times I_{H\,filtrat}}{I_{V\,filtrat} + G \times I_{H\,filtrat}}$$

dans laquelle $I_{V\,filtrat}$ est l'intensité d'émission de fluorescence polarisée verticalement dudit environnement duquel ladite substance fluorescente a été séparée, $I_{H\,filtrat}$ est l'intensité d'émission de fluorescence polarisée horizontalement dudit environnement duquel ladite substance fluorescente a été séparée et G est un facteur de correction pour la transmission inégale desdites émissions de fluorescence polarisées verticalement et horizontalement à travers un système optique d'un instrument de mesure de fluorescence; et

(d). à déterminer lesdites intensités de ladite fluorescence de fond à partir desdites intensités d'émission polarisée verticalement et horizontalement mesurées à ladite première longueur d'onde pour obtenir les intensités d'émission polarisée verticalement et horizontalement dues à la fluorescence de ladite substance fluorescente en l'absence de fluorescence de fond et ensuite à utiliser lesdites intensités d'émission de fluorescence de ladite substance fluorescente en l'absence de fluorescence de fond pour calculer la valeur (P) de polarisation de ladite substance fluorescente dans ledit environnement.

FIG. 1

FIG. 2